# EUROPEAN PATENT SPECIFICATION

(11) **EP 0 760 308 B1**
(45) Date of publication and mention of the grant of the patent: **17.10.2001**
(21) Application number: 96202163.0
(22) Date of filing: 31.07.1996
(51) Int. Cl.: B60N 2/36

(54) **Seat back latch**
Verriegelungsvorrichtung für Sitzrückenlehne
Dispositif de verrouillage pour dossier de sièges

(30) Priority: 18.08.1995 GB 9516914
(43) Date of publication of application: 05.03.1997
(73) Proprietor: Lear Corporation, Southfield, Michigan 48086 (US)
(72) Inventor: Wieclawski, Stanislaw Andrzej, 64521 Gross-Gerau (DE)
(74) Representative: Archer, Philip Bruce

(56) References cited:
- DE-A- 4 329 634

## Description

The present invention relates to a seat back latch for a seat, in particular, a rear seat, in a motor vehicle, and to a seat back latch mechanism.

Seat back latches are provided in motor vehicles to allow the seat back to pivot between a substantially upright position (in which the latch mechanism engages a striker plate or bar) and a substantially horizontal position. The latch mechanism is released from the striker plate or bar to allow the seat back to pivot about a hinge mechanism located at or near the lowermost edge of the seat back. The latch mechanism is usually located in the seat back and is typically released by depressing a push button located in the uppermost surface of the seat back, and the striker plate or bar is secured to the vehicle body.

It is an object of the present invention to provide an improvement to the previously known arrangements.

A seat back latch mechanism in accordance with the present invention comprises a housing which is substantially tubular and extending in an axial direction, the housing having a substantially rectangular cross-section defined by first and second opposed walls, the first opposed walls having aligned apertures therethrough through which a striker plate can extend; a first spring member defined by a pair of axially extending substantially planar legs with a gap therebetween through which the striker plate can extend when the striker plate extends through the housing, the first spring member being positioned inside the housing with the legs extending alongside the second opposed walls of the housing, the legs having free ends which are positioned outside the housing and which are biased towards one another; a pin movable between a first position in which the pin extends through aligned apertures in the second opposed walls of the housing and the legs of the first spring member and a second position in which the pin is withdrawn from the gap between the legs of the first spring member, the pin being capable of passing through an aperture in the striker plate when the striker plate extends through the housing; a substantially rectangular member pivotally mounted at a first edge to the free end of one of the legs of the first spring member, the rectangular member having a second edge opposed the first edge; and a lever member secured at one end to one end of the pin outside of the housing, pivotally attached at its other end to the second edge of the rectangular member, and pivotally mounted at a position intermediate its ends to the free end of the other leg of the first spring member; the latch mechanism having a closed position in which the pin is in its first position, and in which the engaging second edge of the rectangular member and the other end of the lever member are directed away from the gap between the legs of the first spring member, and being movable to an open position by pushing the engaging second edge of the rectangular member and the other end of the lever member towards the gap between the legs of the first member to (a) push the free ends of the legs away from one another against the bias of the first spring member to increase the gap therebetween and (b) to pivot the lever member about its intermediate position to move the pin to its second position.

The present invention also includes a seat back latch comprising the seat back latch mechanism of the present invention, a striker plate, and a manually operable device.

The present invention will now be described, by way of example, with reference to the accompanying drawings, in which:-
Figure 1 is a cross-sectional view of a seat back having a seat back latch in accordance with the present invention;
Figure 2 is a cross-sectional view on the line II-II of Figure 1 with the striker plate secured to the vehicle body;
Figure 3 is a side view of a seat back latch mechanism in accordance with the present invention as used in the seat back latch of Figure 1;
Figure 4 is an end view of the seat back latch mechanism of Figure 3;
Figure 5 is an exploded view of the seat back latch mechanism of Figures 3 and 4;
Figure 6 is a cross-section view of the seat back latch mechanism of Figures 3 to 5 in its closed position with a striker plate fixed therein;
Figure 7 is a cross-sectional view on the line VII-VII of Figure 6;
Figure 8 is a cross-section view of the seat back latch mechanism of Figures 3 to 5 in its open position with a striker plate positioned therein;
Figure 9 is a cross-sectional view on the line IX-IX of Figure 8;
Figure 10 is a cross-section view of the seat back latch mechanism of Figures 3 to 5 in its open position with a striker plate removed; and
Figure 11 is a cross-sectional view on the line XI-XI of Figure 10.

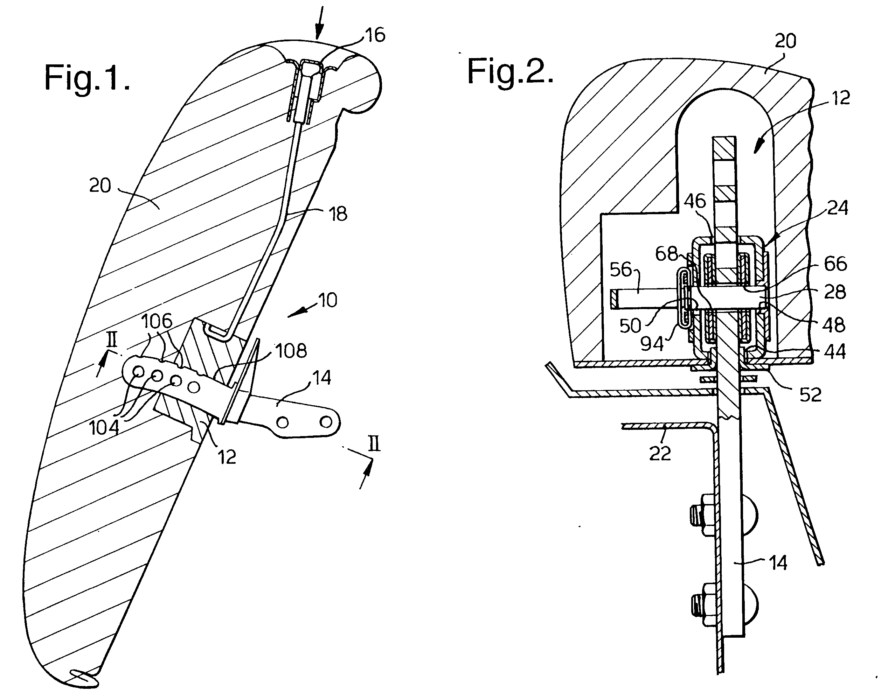

Referring to Figures 1 and 2, a seat back latch 10 in accordance with the present invention comprises a seat back latch mechanism 12 in accordance with the present invention (as will be described in more detail below), a striker plate 14, and a manually operable device in the form of a button 16 connected to the latch mechanism by a substantially rigid rod 18. The latch mechanism 12 is secured to a seat back 20 with the button 16 positioned at the top of the seat back and a hinge mechanism (not shown) secured to the seat back towards or at the bottom of the seat back. An example of a suitable hinge mechanism is described in our GB patent application no. 9512334.5 filed 16 June 1995 (GB-A-2 302 271). The seat back 20 is the seat back of a rear seat in a motor vehicle. The striker plate 14 is secured to a portion 22 of the vehicle body. As will be explained in more detail below, the seat back 20 can be pivoted about the hinge mechanism and then locked in any one of four substantially upright positions, or can be pivoted to lie in a substantially horizontal position, by depressing the button 16. Depression of the button 16 whilst the striker plate 14 extends through the latch mechanism 12 moves the latch mechanism to an open position to allow the latch mechanism and the seat back 20 to move relative to the striker plate. Release of the button 16 whilst the striker plate 14 extends through the latch mechanism 12 allows the latch mechanism to move to its closed position to lock the seat back 20 in one of the substantially upright positions.

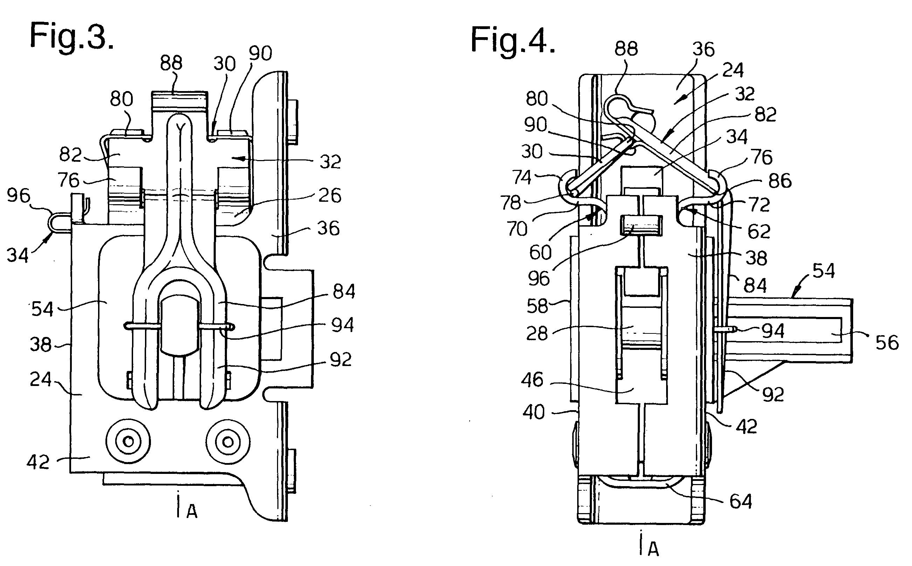

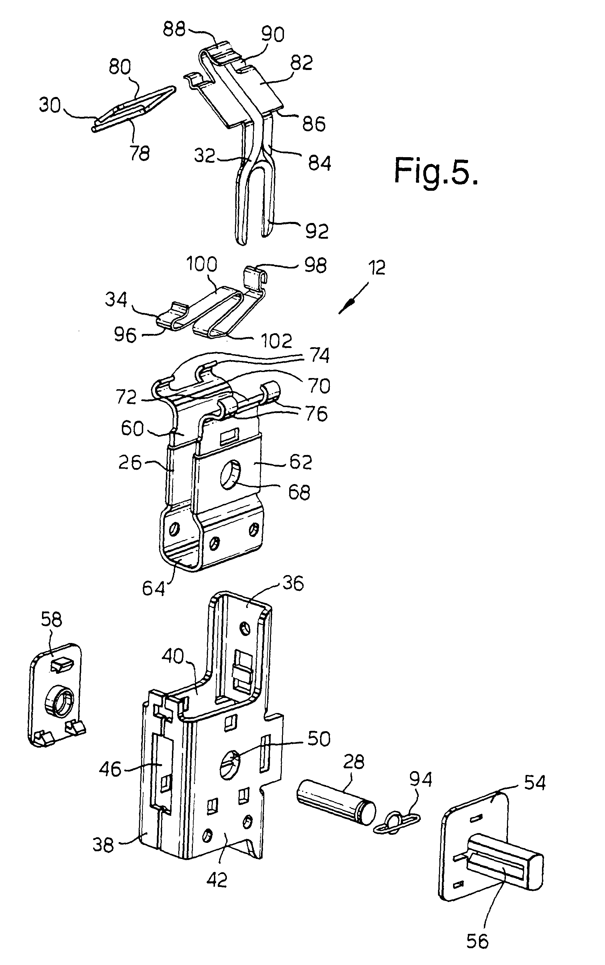

The seat back latch mechanism 12 will now be described with reference to Figures 3 to 5. The latch mechanism 12 comprises a housing 24, a first spring member 26, a pin 28, a substantially rectangular member 30, a lever member 32, and preferably a second spring member 34. The housing 24 is substantially tubular with a substantially rectangular cross-section. The housing 24 has a longitudinal axis A and is define by first opposed walls 36,38, and second opposed walls 40,42. The first opposed walls 36,38 have aligned apertures 44,46, (Figure 2) respectively, therein, through which the striker plate 14 can extend. The second opposed walls 40,42 have aligned apertures 48,50, (Figure 2) respectively, therein, through which the pin 28 can extend. A striker guide 52 (Figure 2) may be secured in the aperture 44 in the first opposed wall 36 to assist the entrance of the striker plate 14 into the latch mechanism 12. A guideway 54 is preferably secured to the outer surface of the second opposed wall 42 and has an open sided guide channel 56 along which the pin 28 can slide in a direction substantially perpendicular to the axis A. The guideway 54 assists in aligning the pin 28 with the apertures 48,50 in the second opposed walls 40,42. An apertured cover 58 may be secured to the outer surface of the other second opposed wall 40 to also provide guidance for the pin 28.

The first spring member 26 is substantially U-shaped and has a pair of legs 60,62 which are substantially planar. The first spring member 26 is secured adjacent its base portion 64 within the housing 24 such that each leg 60,62 extends parallel with, lies alongside, and is normally slightly spaced from, one of the second opposed walls 40,42. Each leg 60,62 has an aperture 66,68, respectively, therethrough which aligns with the corresponding aperture 48,50 in the adjacent second opposed wall 40,42, and through which the pin 28 can extend. The free end 70,72 of each leg 60,62, respectively, extends outside of the housing 24 and is bent to define a C-shaped portion 74,76, respectively, such that the C-shaped portions have open sides which face one another. The first spring member 26 is such that the free ends 70,72 of the legs 60,62, respectively, are biased towards one another.

The rectangular member 30 is in the form of a bent wire spring. The rectangular member 30 has a first edge 78 which is positioned in, and is pivotally movable in, the C-shaped portion 74 of the free end 70 of the leg 60 of the first spring member 26. Opposite the first edge 78, the rectangular member 30 has a second edge 80.

The lever member 32 is in the form of a bent leaf spring. The lever member 32 has first and second substantially planar portions 82,84 which lie at an angle to one another. The junction of the first and second portions 82,84 defines an intermediate position which has an edge 86 which is positioned in, and is pivotally movable in, the C-shaped portion 76 of the free end 72 of the leg 62 of the first spring member 26. The first portion 82 is bent at its end remote from the edge 86 to define a hook portion 88 which is attached to the rod 18 on mounting the latch mechanism 12 in the seat back 20, and to provide a hinge portion 90 within which the second edge 80 of the rectangular member 30 can be positioned and pivotally mounted. The second portion 84 is split to define a fork portion 92, the legs of which pass on either side of the open sided channel 56 in the guideway 54. The fork portion 92 is attached to one end of the pin 28 by way of a spring clip 94 which extends through the open sides in the channel 56.

The second spring member 34 is in the form of a leaf spring which has been bent into a substantially Z-shape. One end 96 of the second spring member is secured to the first opposed wall 38, and the other end 98 of the second spring member is secured to the first opposed wall 36. The second spring member 34 is positioned to extend between the legs 60,62 adjacent their free ends 70,72, and has a surface or edge 100 directed towards the first portion 82 of the lever member 32 and towards the rectangular member 30, and a bent portion 102 directed towards the striker plate 14 (when the striker plate extends through the latch mechanism 12) and towards the base portion 64 of the first spring member 26.

As can be seen from Figure 1, the striker plate 14 comprises four apertures 104 therethrough through which the pin 28 of the latch mechanism 12 can extend. Aligned with each aperture is a notch 106 which is formed in a surface 108 of the striker plate 14. When the striker plate 14 extends through the latch mechanism 12, the bent portion 102 of the second spring member 34 engages in one of the notches 106 to align the pin 28 with the corresponding aperture 104 in the striker plate.

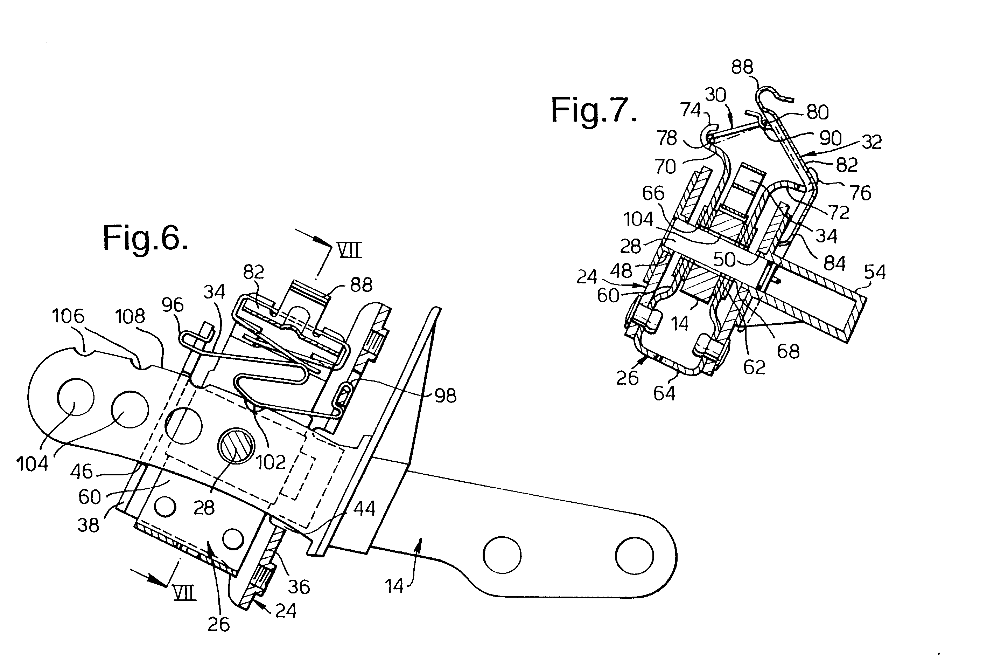

The operation of the latch mechanism 12 will now be described with reference to Figures 6 to 11. Figures 6 and 7 show the latch mechanism 12 in its closed (or normal, steady-state) position. The striker plate 14 extends through the latch mechanism 12 by way of the apertures 44,46 in the first opposed walls 36,38 of the housing 24. In this position, the striker plate 14 also passes through the gap between the legs 60,62 of the first spring member 26; the bent portion 102 of the second spring member 34 engages one of the notches 106 in the striker plate; and the pin 28 extends through the apertures 48,50 in the second opposed walls 40,42, the apertures 66,68 in the legs, and one of the apertures 104 in the striker plate. The rectangular member 30 and the lever member 32 have the relative positions shown in Figure 7. That is, the bias exerted by the legs 60,62 pushes the first edge 78 of the rectangular member 30 and the edge 86 on the lever member 32 towards one another, and, because of the pivotal connections, pushes the second edge 80 of the rectangular member and the hinge portion 90 on the lever member to a position in which they are directed away from the striker plate 14. The forces acting on the lever member 32 retain the pin 28 in the position shown (its first position). Further still, the bias exerted by the legs 60,62 brings the legs into engagement with the striker plate 14 to clamp the striker plate thereby reducing the risk of, and substantially eliminating, rattle noises occurring between the striker plate and the latch mechanism 12.

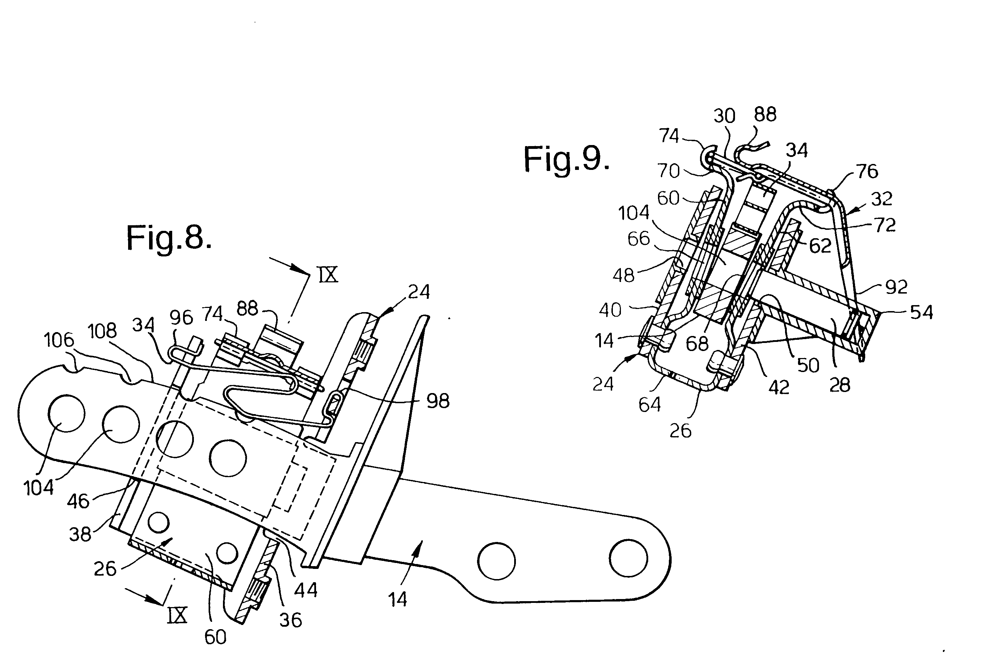

In order to move the latch mechanism 12 to its open or released position (Figures 8 and 9), the button 16 (Figure 1) is pushed down towards the latch mechanism. This action exerts a force, by way of rod 18 (Figure 1) on the hook portion 88 of the lever member 32, and due to the pivotal connections, pushes the hook portion and the hinge portion 90 of the lever member and the second edge 80 of the rectangular member 30 towards the second spring member 34 and the striker plate 14, until the rectangular member 30 and the first portion 82 of the lever member substantially lie in a common plane. In this position, the second spring member 34 is slightly compressed between the striker plate 14 and the hinge portion 90 of the lever member 32/second edge 80 of the rectangular member 30. As a consequence of this relative movement, the free ends 70,72 of the legs 60,62 are moved away from one another to increase the gap therebetween and release the grip exerted by the legs on the striker plate 14. Also, the lever member 32 pivots about its edge 86 to pull the pin 28 out of the aperture 104 in the striker plate 14. The striker plate 14 is now free to move relative to the latch mechanism 12. This means the seat back 20 (Figure 1) can be pivoted to an alternative upright position and the button 16 released so that the latch mechanism 12 moves back to its closed position and locked to the striker plate 14, or the seat back can be moved to a substantially horizontal position in which the striker plate is removed from the latch mechanism.

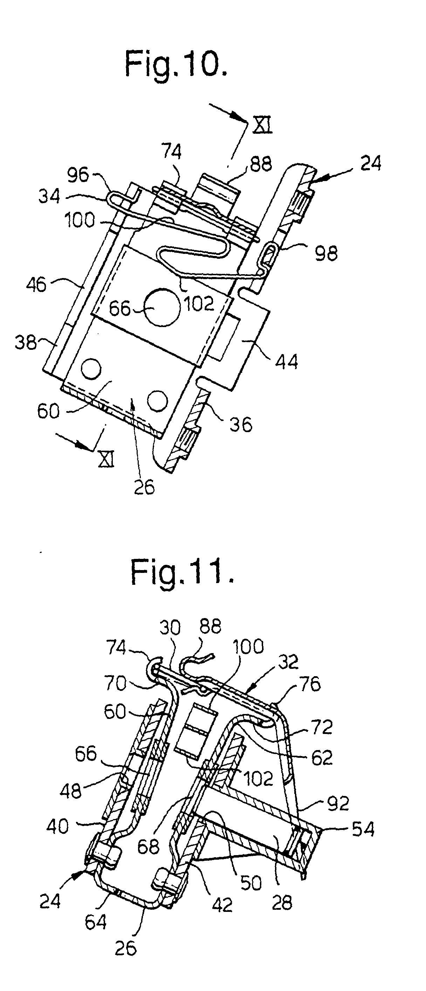

When the striker plate 14 is removed from the latch mechanism 12 (Figures 10 and 11), the second spring member 34 moves away from the hinge portion 90 of the lever member 32/second edge 80 of the rectangular member 30, and the rectangular member 30 and the first portion 82 of the lever member remain in the common plane with the pin 28 retracted from the gap between the legs 60,62 of the first spring member 26. In this position, the latch member 12 is ready to receive the insertion of the striker plate 14.

On inserting the striker plate 14 through the aperture 44 in the first opposed wall 36 and between the legs 60,62, the surface 108 of the striker plate 14 engages the second spring 34 to move the surface or edge 100 of the second spring member 34 into engagement with the hinge portion 90 of the lever member 32/second edge 80 of the rectangular member 30. This action pushes the hinge portion 90 of the lever member 32 and the second edge 80 of the rectangular member 30 away from the striker plate 14. When the bent portion 102 of the second spring member 34 locates in a notch 106 in the striker plate 14, the rectangular member 30 and the lever member 32 can fully return to the position shown in Figures 6 and 7 and the pin 28 passes through the corresponding aperture 104 in the striker plate. This arrangement provides for automatic locking of the latch mechanism 12 on the striker plate 14.

The positive locking of the pin 28 of the latch mechanism 12 with one of the apertures 104 in the striker plate 14 provides a seat back latch 10 with increased strength when compared to previously known arrangements. This increase in strength reduces the risk of failure of the latch should the seat back be subjected to an impact by an object from the rear of the seat back. The provision of the possibility of locking the seat back in one of a number of substantially upright positions allows the vehicle occupant to select an upright position dependent on comfort and load space utilisation. It will be appreciated that the number of potential upright positions can easily be changed simply by using a striker plate with a different number of apertures. The feature of the legs gripping the striker plate reduces the risk of rattle noise.

Although primarily intended to be used with a rear seat of a motor vehicle, it will be appreciated that the present invention could also be adapted to be used with the seat back of a front seat of a motor vehicle.

## Claims

1. A seat back latch mechanism (12) comprising a housing (24) which is substantially tubular and extending in an axial direction, the housing having a substantially rectangular cross-section defined by first and second opposed walls (36-42), the first opposed walls (36,38) having aligned apertures (46) therethrough through which a striker plate (14) can extend; a first spring member (26) defined by a pair of axially extending substantially planar legs (60,62) with a gap therebetween through which the striker plate can extend when the striker plate extends through the housing, the first spring member being positioned inside the housing with the legs extending alongside the second opposed walls (40,42) of the housing, the legs having free ends (70,72) which are positioned outside the housing and which are biased towards one another; a pin (28) movable between a first position in which the pin extends through aligned apertures (48,50,66,68) in the second opposed walls of the housing and the legs (60,62) of the first spring member (26) and a second position in which the pin (28) is withdrawn from the gap between the legs of the first spring member, the pin being capable of passing through an aperture (104) in the striker plate when the striker plate extends through the housing; a substantially rectangular member (30) pivotally mounted at a first edge (78) to the free end (70) of one of the legs of the first spring member, the rectangular member having a second edge (80) opposed the first edge; and a lever member (32) secured at one end (92) to one end of the pin outside of the housing, pivotally attached at its other end (90) to the second edge of the rectangular member, and pivotally mounted at a position (86) intermediate its ends to the free end (72) of the other leg of the first spring member; the latch mechanism (12) having a closed position in which the pin is in its first position, and in which the engaging second edge (80) of the rectangular member (30) and the other end (90) of the lever member are directed away from the gap between the legs of the first spring member, and being movable to an open position by pushing the engaging second edge (80) of the rectangular member (30) and the other end (90) of the lever member towards the gap between the legs of the first member to (a) push the free ends (70,72) of the legs away from one another against the bias of the first spring member (26) to increase the gap therebetween and (b) to pivot the lever member about its intermediate position to move the pin to its second position.

2. A seat back latch mechanism as claimed in Claim 1, further comprising a second spring member (34) having a substantially Z-shape, the second spring member being mounted on the first opposed walls (36,38) of the housing (24) to extend between the legs (60,62) of the first spring member (26) adjacent their free ends, the second spring member being engageable with the striker plate (14) when the striker plate extends through the housing, and, when the latch mechanism is in its open position and when the striker plate extends through the housing, acts on the second edge (80) of the rectangular member (30) and the other end (90) of the lever member (32) to bias the latch mechanism towards its closed position.

3. A seat back latch mechanism as claimed in Claim 2, wherein the second spring (34) member is in the form of a leaf spring.

4. A seat back latch mechanism as claimed in any one of Claims 1 to 3, wherein the rectangular member (30) is in the form of a bent wire spring.

5. A seat back latch mechanism as claimed in any one of Claims 1 to 4, wherein the lever member (32) is in the form of a leaf spring.

6. A seat back latch mechanism as claimed in any one of Claims 1 to 5, wherein the pin (28) is slidable between its first and second positions in a guideway (54) attached to the housing (24).

7. A seat back latch mechanism as claimed in any one of Claims 1 to 6, wherein the free end (70,72) of each leg (60,62) of the first spring member (26) is bent into a substantially C-shape to define a portion of the pivotal connection between the free end of each leg and the first edge (78) of the rectangular member (30) and the intermediate position (86) of the lever member (32) respectively.

8. A seat back latch mechanism as claimed in any one of Claims 1 to 7, wherein the first spring member (26) has a substantially U-shape defining a base portion (64) and the planar legs (60,62), the first spring member being secured to the housing (24) adjacent the base portion thereof.

9. A seat back latch comprising a seat back latch mechanism as claimed in any one of Claims 1 to 8; a striker plate (14) which can extend through the aligned apertures (46) in the first opposed walls (36,38) of the housing (24) of the latch mechanism and the gap between the legs (60,62) in the first spring member (26), the striker plate having at least one aperture (104) through which the pin (28) can extend in the closed position of the latch mechanism; and a manually operable device (16) connected to the other end (90) of the lever member (32) or to the second edge (80) of the rectangular member (30) for moving the latch mechanism from its closed position to its open position.

10. A seat back latch as claimed in Claim 9, wherein the gap between the legs (60,62) of the first spring member (26) is such that the legs grip the striker plate (14) when the latch mechanism is in the closed position.

11. A seat back latch as claimed in Claim 9 or Claim 10, wherein the striker plate (14) has two or more apertures (104) therethrough, the pin (28) extending through a selected aperture when the latch mechanism is in its closed position.

12. A seat back latch as claimed in any one of Claims 9 to 11, in which the latch mechanism has a second spring member (34) as claimed in Claim 2 or Claim 3, wherein the striker plate (14) has aligned with the or each aperture (104) therethrough a corresponding notch (106) in its surface (108), the second spring member having a bent portion (102) for locating in the or one of the notches to align the pin with the corresponding aperture in the striker plate.

13. A seat back latch as claimed in any one of Claims 9 to 12, wherein the manually operable device comprises a button (16) which is connected to the other end (90) of the lever member (32) or to the second edge (80) of the rectangular member (30) by a substantially rigid rod (18).

## Patentansprüche

1. Sitzlehnen-Verriegelungsmechanismus (12), der folgendes aufweist:
ein Gehäuse (24), das im wesentlichen rohrförmig ausgebildet ist und sich in Axialrichtung erstreckt, wobei das Gehäuse einen im wesentlichen rechteckigen Querschnitt hat, der von ersten und zweiten einander gegenüberliegenden Wänden (36 - 42) gebildet ist, wobei die ersten einander gegenüberliegenden Wände (36, 38) miteinander ausgefluchtete Öffnungen (46) aufweisen, durch die sich eine Schließplatte (14) hindurcherstrecken kann;
ein erstes Federelement (26), das von einem Paar axial verlaufender, im wesentlichen planer Schenkel (60, 62) mit einem dazwischen vorhandenen Spalt gebildet ist, durch den sich die Schließplatte erstrecken kann, wenn sich die Schließplatte durch das Gehäuse erstreckt, wobei das erste Federelement im Inneren des Gehäuses derart angeordnet ist, daß sich die Schenkel längs der zweiten einander gegenüberliegenden Wände (40, 42) des Gehäuses erstrecken, wobei die Schenkel freie Enden (70, 72) aufweisen, die außerhalb des Gehäuses angeordnet sind und in Richtung aufeinander zu vorgespannt sind;
einen Stift (28), der zwischen einer ersten Position, in der sich der Stift durch die ausgefluchteten Öffnungen (48, 50, 66, 68) in den zweiten einander gegenüberliegenden Wänden des Gehäuses sowie durch die Schenkel (60, 62) des ersten Federelements (26) erstreckt, und
einer zweiten Position beweglich ist, in der der Stift (28) aus dem Spalt zwischen den Schenkeln des ersten Federelements zurückgezogen ist, wobei sich der Stift durch eine Öffnung (104) in der Schließplatte hindurcherstrecken kann, wenn sich die Schließplatte durch das Gehäuse erstreckt;
ein im wesentlichen rechteckiges Element (30), das an einem ersten Rand (78) an dem freien Ende (70) von einem der Schenkel des ersten Federelements schwenkbar angebracht ist, wobei das rechteckige Element einen dem ersten Rand gegenüberliegenden, zweiten Rand (80) aufweist; und
ein Hebelelement (32), das an seinem einen Ende (92) an dem einen Ende des Stifts außerhalb des Gehäuses befestigt ist und an seinem anderen Ende (90) an dem zweiten Rand des rechteckigen Elements schwenkbar angebracht ist sowie an einer zwischen seinen Enden gelegenen Stelle (86) an dem freien Ende (72) des anderen Schenkels des ersten Federelements schwenkbar angebracht ist;
wobei der Verriegelungsmechanismus (12) eine geschlossene Stellung aufweist, in der sich der Stift in seiner ersten Position befindet und in der der damit in Eingriff befindliche, zweite Rand (80) des rechteckigen Elements (30) sowie das andere Ende (90) des Hebelelements von dem Spalt zwischen den Schenkeln des ersten Federelements weg gerichtet sind, sowie in eine geöffnete Stellung bewegbar sind, wenn der zweite Eingriffsrand (80) des rechteckigen Elements (30) und der andere Rand (90) des Hebelelements in Richtung auf den Spalt zwischen den Schenkeln des ersten Elements gedrückt werden, um
(a) die freien Enden (70, 72) der Schenkel gegen die Vorspannung des ersten Federelements (26) voneinander weg zu drücken, um den dazwischen vorhandenen Spalt zu vergrößern, und
(b) das Hebelelement um seine zwischengeordnete Stelle zu verschwenken, um den Stift in seine zweite Position zu bewegen.

2. Sitzlehnen-Verriegelungsmechanismus nach Anspruch 1, weiterhin mit einem zweiten Federelement (34), das im wesentlichen Z-förmig ist, wobei das zweite Federelement an den ersten einander gegenüberliegenden Wänden (36, 38) des Gehäuses (24) derart angebracht ist, daß es sich zwischen den Schenkeln (60, 62) des ersten Federelements (26) in der Nähe von deren freien Enden erstreckt, wobei das zweite Federelement mit der Schließplatte (14) in Eingriff bringbar ist, wenn sich die Schließplatte durch das Gehäuse erstreckt, und dann, wenn sich der Verriegelungsmechanismus in seiner geöffneten Stellung befindet und sich die Schließplatte durch das Gehäuse erstreckt, auf den zweiten Rand (80) des rechteckigen Elements (30) sowie das andere Ende (90) des Hebelelements (32) wirkt, um den Verriegelungsmechanismus in Richtung auf seine geschlossene Stellung vorzuspannen.

3. Sitzlehnen-Verriegelungsmechanismus nach Anspruch 2, wobei das zweite Federelement (34) in Form einer Blattfeder vorliegt.

4. Sitzlehnen-Verriegelungsmechanismus nach einem der Ansprüche 1 bis 3,
wobei das rechteckige Element (32) in Form einer gebogenen Drahtfeder vorliegt.

5. Sitzlehnen-Verriegelungsmechanismus nach einem der Ansprüche 1 bis 4,
wobei das Hebelelement (32) in Form einer Blattfeder vorliegt.

6. Sitzlehnen-Verriegelungsmechanismus nach einem der Ansprüche 1 bis 5,
wobei der Stift (28) zwischen seiner ersten und seiner zweiten Position in einer an dem Gehäuse (24) angebrachten Führungsbahn (54) verschiebbar ist.

7. Sitzlehnen-Verriegelungsmechanismus nach einem der Ansprüche 1 bis 6,
wobei das freie Ende (70, 72) jedes Schenkels (60, 62) des ersten Federelements (26) im wesentliche C-förmig gekrümmt ist, um einen Schwenkverbindungsbereich zwischen dem freien Ende jedes Schenkels und dem ersten Rand (78) des rechteckigen Elements (30) bzw. der zwischengeordneten Position (86) des Hebelelements (32) zu bilden.

8. Sitzlehnen-Verriegelungsmechanismus nach einem der Ansprüche 1 bis 7,
wobei das erste Federelement (26) im wesentlichen U-förmig ist und einen Basisbereich (64) sowie die planen Schenkel (60, 62) bildet, wobei das erste Federelement nahe seinem Basisbereich an dem Gehäuse (24) befestigt ist.

9. Sitzlehnen-Verriegelungseinrichtung mit
einem Sitzlehnen-Verriegelungsmechanismus nach einem der Ansprüche 1 bis 8,
mit einer Schließplatte (14), die sich durch die miteinander ausgefluchteten Öffnungen (46) in den ersten einander gegenüberliegenden Wänden (36, 38) des Gehäuses (24) des Verriegelungsmechanismus sowie durch den Spalt zwischen den Schenkeln (60, 62) in dem ersten Federelement (26) erstrecken kann, wobei die Schließplatte mindestens eine Öffnung (104) aufweist, durch die sich der Stift (28) in der geschlossenen Stellung des Verriegelungsmechanismus hindurcherstrecken kann; und
mit einer von Hand betätigbaren Vorrichtung (16), die mit dem anderen Ende (90) des Hebelelements (32) oder mit dem zweiten Rand (80) des rechteckigen Elements (30) verbunden ist, um den Verriegelungsmechanismus aus seiner geschlossenen Stellung in seine geöffnete Stellung zu bewegen.

10. Sitzlehnen-Verriegelungseinrichtung nach Anspruch 9, wobei der Spalt zwischen den Schenkeln (60, 62) des ersten Federelements (26) derart ist, daß die Schenkel die Schließplatte (14) greifen, wenn sich der Verriegelungsmechanismus in der geschlossenen Stellung befindet.

11. Sitzlehnen-Verriegelungseinrichtung nach Anspruch 9 oder Anspruch 10,
wobei die Schließplatte (14) zwei oder mehr hindurchgehende Öffnungen (104) aufweist, wobei sich der Stift (28) durch eine ausgewählte Öffnung hindurcherstreckt, wenn sich der Verriegelungsmechanismus in seiner geschlossenen Stellung befindet.

12. Sitzlehnen-Verriegelungseinrichtung nach einem der Ansprüche 9 bis 11,
wobei der Verriegelungsmechanismus ein zweites Federelement (34) nach Anspruch 2 oder Anspruch 3 aufweist,
wobei die Schließplatte (14) mit der oder jeder darin ausgebildeten Öffnung (104) ausgefluchtet eine entsprechende Kerbe (106) in ihrer Oberfläche (108) aufweist, wobei das zweite Federelement einen abgewinkelten Bereich (102) zur Festlegung in der oder jeder der Kerben aufweist, um den Stift mit der entsprechenden Öffnung in der Schließplatte auszufluchten.

13. Sitzlehnen-Verriegelungseinrichtung nach einem der Ansprüche 9 bis 12,
wobei die von Hand betätigbare Vorrichtung einen Knopf (16) aufweist, der durch eine im wesentlichen starre Stange (18) mit dem anderen Ende (90) des Hebelelements (32) oder mit dem zweiten Rand (80) des rechteckigen Elements (30) verbunden ist.

## Revendications

1. Mécanisme de verrouillage pour dossier de siège (12) comprenant un boîtier (24) qui est sensiblement tubulaire et s'étend dans une direction axiale, le boîtier ayant une section transversale sensiblement rectangulaire définie par des premières et deuxièmes parois opposées (36 - 42), les premières parois opposées (36, 38) comportant des trous traversants alignés (46) dans lesquels peut passer une plaque de gâchette (14) ; un premier élément élastique (26) défini par deux branches sensiblement planes s'étendant axialement (60, 62) qui laissent entre elles un intervalle à travers lequel la plaque de gâchette peut s'étendre lorsque la plaque de gâchette traverse le boîtier, le premier élément élastique étant placé à l'intérieur du boîtier de sorte que les branches s'étendent le long des deuxièmes parois opposées (40, 42) du boîtier, les branches ayant des extrémités libres (70, 72) qui sont placées à l'extérieur du boîtier et qui sont rappelées l'une vers l'autre ; une broche (28) déplaçable entre une première position dans laquelle la broche passe dans des trous alignés (48, 50, 66, 68) prévus dans les deuxièmes parois opposées du boîtier et dans les branches (60, 62) du premier élément élastique (26), et une deuxième position dans laquelle la broche (28) est retirée de l'intervalle entre les branches du premier élément élastique, la broche pouvant passer dans un trou (104) de la plaque de gâchette lorsque la plaque de gâchette traverse le boîtier ; un élément sensiblement rectangulaire (30) monté de façon pivotante, à l'endroit d'un premier bord (78), sur l'extrémité libre (70) d'une des branches du premier élément élastique, l'élément rectangulaire ayant un deuxième bord (80) à l'opposé du premier bord ; et un levier (32) fixé, à l'endroit d'une extrémité (92), à une extrémité de la broche à l'extérieur du boîtier, attaché de façon pivotante à l'endroit de son autre extrémité (90) au deuxième bord de l'élément rectangulaire, et monté de façon pivotante, à un endroit (86) situé entre ses extrémités, à l'extrémité libre (72) de l'autre branche du premier élément élastique ; le mécanisme de verrouillage (12) ayant une position fermée dans laquelle la broche est dans sa première position et dans laquelle le deuxième bord d'enclenchement (80) de l'élément rectangulaire (30) et la dite autre extrémité (90) du levier sont dirigés à l'opposé de l'intervalle entre les branches du premier élément élastique, et étant déplaçable à une position ouverte par poussée du deuxième bord d'enclenchement (80) de l'élément rectangulaire (30) et de l'autre extrémité (90) du levier vers l'intervalle entre les branches du premier élément élastique afin de (a) pousser les extrémités libres (70, 72) des branches à l'opposé l'une de l'autre contre l'action de rappel du premier élément élastique (26) de manière à augmenter l'intervalle entre les dites branches, et (b) faire pivoter le levier autour de sa position intermédiaire de manière à amener la broche à sa deuxième position.

2. Mécanisme de verrouillage pour dossier de siège selon la revendication 1, comprenant en outre un deuxième élément élastique (34) sensiblement en forme de Z, le deuxième élément élastique étant monté sur les premières parois opposées (36, 38) du boîtier (24) de manière à s'étendre entre les branches (60, 62) du premier élément élastique (26) près de leurs extrémités libres, le deuxième élément élastique pouvant venir en prise avec la plaque de gâchette (14) lorsque la plaque de gâchette traverse le boîtier, et, lorsque le mécanisme de verrouillage est dans sa position ouverte et que la plaque de gâchette traverse le boîtier, il agit sur le deuxième bord (80) de l'élément rectangulaire (30) et sur l'autre extrémité (90) du levier (32) pour rappeler le mécanisme de verrouillage vers sa position fermée.

3. Mécanisme de verrouillage pour dossier de siège selon la revendication 2, dans lequel le deuxième élément élastique (34) est sous la forme d'un ressort à lame.

4. Mécanisme de verrouillage pour dossier de siège selon une quelconque des revendications 1 à 3, dans lequel l'élément rectangulaire (30) est sous la forme d'un ressort en fil métallique plié.

5. Mécanisme de verrouillage pour dossier de siège selon une quelconque des revendications 1 à 4, dans lequel le levier (32) est sous la forme d'un ressort à lame.

6. Mécanisme de verrouillage pour dossier de siège selon une quelconque des revendications 1 à 5, dans lequel la broche (28) peut coulisser entre ses première et deuxième positions dans un guidage (54) fixé au boîtier (24).

7. Mécanisme de verrouillage pour dossier de siège selon une quelconque des revendications 1 à 6, dans lequel l'extrémité libre (70, 72) de chaque branche (60, 62) du premier élément élastique (26) est pliée sensiblement en forme de C pour définir une portion de la connexion pivotante entre l'extrémité libre de chaque branche, et le premier bord (78) de l'élément rectangulaire (30) et la position intermédiaire (86) du levier (32) respectivement.

8. Mécanisme de verrouillage pour dossier de siège selon une quelconque des revendications 1 à 7, dans lequel le premier élément élastique (26) est sensiblement en forme de U définissant une partie de base (64) et les branches planes (60, 62), le premier élément élastique étant fixé au boîtier (24) près de sa partie de base.

9. Verrou de dossier de siège comprenant un mécanisme de verrouillage pour dossier de siège selon une quelconque des revendications 1 à 8 ; une plaque de gâchette (14) qui peut passer dans les trous alignés (46) des premières parois opposées (36, 38) du boîtier (24) du mécanisme de verrouillage et dans l'intervalle entre les branches (60, 62) du premier élément élastique (26), la plaque de gâchette ayant au moins un trou (104) à travers lequel la broche (28) peut passer dans la position fermée du mécanisme de verrouillage ; et un dispositif actionnable manuellement (16) relié à l'autre extrémité (90) du levier (32) ou au deuxième bord (80) de l'élément rectangulaire (30) pour déplacer le mécanisme de verrouillage de sa position fermée à sa position ouverte.

10. Verrou de dossier de siège selon la revendication 9, dans lequel l'intervalle entre les branches (60, 62) du premier élément élastique (26) est tel que les branches serrent la plaque de gâchette (14) lorsque le mécanisme de verrouillage est dans la position fermée.

11. Verrou de dossier de siège selon la revendication 9 ou la revendication 10, dans lequel la plaque de gâchette (14) comporte deux trous traversants (104) ou plus, la broche (28) passant dans un trou choisi lorsque le mécanisme de verrouillage est dans sa position fermée.

12. Verrou de dossier de siège selon une quelconque des revendications 9 à 11, dans lequel le mécanisme de verrouillage comprend un deuxième élément élastique (34) selon la revendication 2 ou la revendication 3, dans lequel la plaque de gâchette (14) comporte, en alignement avec le ou chaque trou traversant (104), une encoche correspondante (106) dans sa surface (108), le deuxième élément élastique ayant une partie pliée (102) qui se place dans l'encoche ou une des encoches pour aligner la broche avec le trou correspondant de la plaque de gâchette.

13. Verrou de dossier de siège selon une quelconque des revendications 9 à 12, dans lequel le dispositif actionnable manuellement comprend un bouton (16) qui est relié à l'autre extrémité (90) du levier (32) ou au deuxième bord (80) de l'élément rectangulaire (30) par une tige sensiblement rigide (18).
